# EUROPEAN PATENT APPLICATION

(11) **EP 1 607 562 A1**
(43) Date of publication of application: **21.12.2005**
(21) Application number: 05012470.0
(22) Date of filing: 09.06.2005
(51) Int. Cl.: E05F 11/00, B60J 7/057

(54) **Control device of opening and closing member**

(30) Priority: 14.06.2004 JP 2004175826
(71) Applicant: AISIN SEIKI KABUSHIKI KAISHA, Kariya-shi, Aichi-ken 448-8650 (JP)
(72) Inventor: Honma, Chiaki c/oAisin Engineering Co., Ltd., Aichi, 448-8605 (JP); Suzuki, Shintaro c/oIPD, Aisin Seiki Kab. Kaisha, Kariya-shi, Aichi-ken 448-8650 (JP); Imaizumi, Tomoaki c/oIPD, Aisin Seiki Kab. Kaisha, Kariya-shi, Aichi-ken 448-8650 (JP); Itami, Eiji c/oIPD, Aisin Seiki Kab. Kaisha, Kariya-shi, Aichi-ken 448-8650 (JP)
(74) Representative: TBK-Patent

(57) **Abstract**

A control device of opening and closing member (10) includes a driving means (15) for driving, by means of a duty ratio control, an opening and closing member (D), a speed detecting means, and a controlling means (12) for driving the opening and closing member, and stopping or reversing a movement of the opening and closing member characterized in that the controlling means includes a duty ratio determining means (24) for providing a duty ratio to the driving means every predetermined number of periods so that a speed of the opening and closing member reaches the control speed, and increasing a duty ratio when a speed of the opening and closing member becomes below the target speed, and a duty ratio difference calculating means for calculating a difference between a present duty ratio (DTn) and a duty ratio before a predetermined number of periods (DT0).

## Description

### FIELD OF THE INVENTION

This invention generally relates to a control device of opening and closing member that performs an opening and closing operation relative to an opening portion provided on a structure.

### BACKGROUND

A known control device of opening and closing member is used, in the automotive field, for example, in a power window regulator device for moving a window provided on a vehicle door (i.e. window glass) in upward or downward direction, a sunroof device for moving a window provided on an upper side of a vehicle (i.e. sunroof) in a vehicle longitudinal direction, a power sliding device for opening and closing a vehicle door provided on a vehicle side portion (i.e. sliding door), and the like. Recently, the aforementioned devices are equipped with an anti-pinch function from safety aspect.

Japanese Patent Laid-Open Publication No. H05-280253 discloses such a control device with the and-pinch function as employed in a power window regulator device. According to the power window regulator device disclosed, a driving status of a motor, such as a driving speed of a motor, that drives a window glass, is detected by a potentiometer. Then, a control unit determines that a pinch occurs in upward or downward movement of the window glass when the rotational speed of the motor decreases by a predetermined value or more relative to a reference speed, which is acquired in cases where a motor rotation is stable, i.e. a rotation speed stable period. The control unit then brings the motor to reverse.

In cases where a pinch is determined in the aforementioned manner according to the power window regulator device disclosed, a pinch handling is performed if a rotational speed of the motor decreases by a predetermined value or more relative to a reference speed that has been calculated on the basis of average of rotational speeds, for example.

However, even if a speed of the opening and closing member is controlled on the basis of a reference speed, the speed of the opening and closing member varies depending on a mechanical factor such as a structure of a driving mechanism for driving the opening and closing member, and a position of the opening and closing member. In order to prevent a wrong pinch determination, a reference value for pinch detection needs to be defined with some margin, which may cause a degradation of the detection ability. In addition, in cases where the opening and closing member is controlled to be decelerated, in order to prevent a wrong determination of pinch, a reference value needs to be defined by considering some margin for noise, which applies to a speed of the opening and closing member due to disturbance acting thereon. In this case also, the detection ability of pinch may be degraded.

Thus, a need exists for a control device of opening and closing member whose detection ability of pinch can be improved during a deceleration control of the opening and closing member.

### SUMMARY OF THE INVENTION

According to an aspect of the present invention, a control device of opening and closing member includes a driving means for driving, by means of a duty ratio control, an opening and closing member to be opened or closed relative to an opening portion provided on a structure, a speed detecting means for detecting a moving speed of the opening and closing member, and a controlling means for driving the opening and closing member based on a position of the opening and closing member, and stopping or reversing a movement of the opening and closing member when a movement of the opening and closing member is inhibited between the opening and closing member and the structure characterized in that the controlling means includes a target speed determining means for determining a target speed of the opening and closing member, a speed estimating means for estimating a moving speed of the opening and closing member, a control speed determining means for determining a control speed of the opening and closing member based on an estimated speed estimated by the speed estimating means and the target speed, a duty ratio determining means for providing a duty ratio to the driving means every predetermined number of periods so that a speed of the opening and closing member reaches the control speed, and increasing a duty ratio when a speed of the opening and closing member becomes below the target speed, a duty ratio difference calculating means for calculating a difference between a present duty ratio and a duty ratio before a predetermined number of periods, and a movement inhibition detecting means for detecting that a movement of the opening and closing member is inhibited when the duty ratio difference exceeds a reference value.

According to the aforementioned invention, the controlling means determines a target speed of the opening and closing member and estimates a speed thereof. Then, the controlling means determines a control speed for controlling the opening and closing member based on the estimated speed and the target speed of the opening and closing member. In addition, the opening and closing member provides a duty ratio to the driving means per predetermined period so that a speed of the opening and closing member reaches the control speed. In cases where a speed of the opening and closing member becomes below the target speed, the controlling means increases a duty ratio. The controlling means evaluates a difference between a present duty ratio and a duty ratio before the predetermined number of control periods, and detects a movement inhibition state of the opening and closing member (for example, occurrence of pinch caused by movement of the opening and closing member) if the evaluated duty ratio difference exceeds a predetermined reference value.

### BRIEF DESCRIPTION OF THE DRAWINGS

The foregoing and additional features and characteristics of the present invention will become more apparent from the following detailed description considered with reference to the accompanying drawings, wherein:

Fig. 1 is a view showing a control device of opening and closing member according to an embodiment of the present invention employed in a vehicle sliding door device;

Fig. 2 is a block diagram showing an electrical structure of the control device of the opening and closing member;

Fig. 3 is a graph showing a relationship between a target speed and a position of the sliding door when the sliding door moves;

Fig. 4 is a flowchart of a process for controlling the sliding door by a microcomputer;

Fig. 5 is a view for explaining how to evaluate a control speed;

Fig. 6 is a flowchart of a pinch determination process shown in Fig. 4; and

Fig. 7 is a graph showing a time period from a pinch occurrence to a pinch detection in the pinch determination process.

### DETAILED DESCRIPTION

An embodiment of the present invention is explained with reference to the attached drawings.

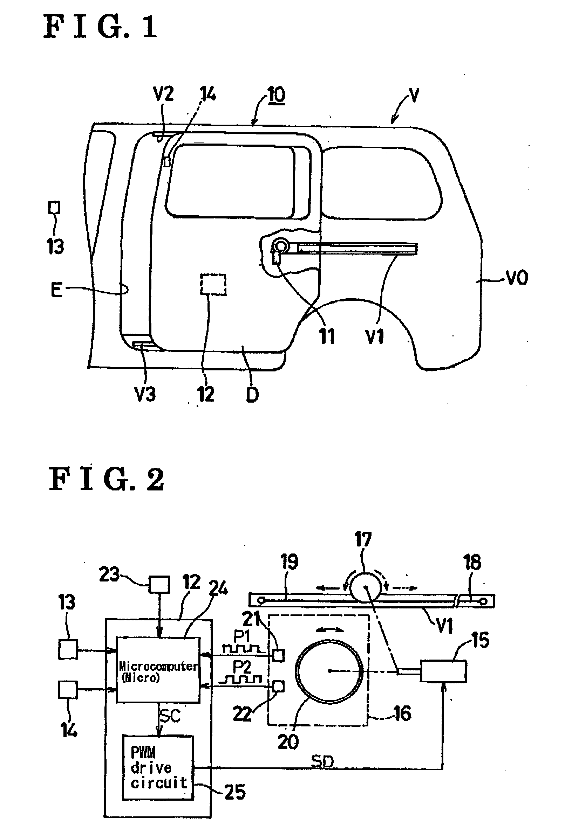

Fig. 1 is a view of a control device of opening and closing member employed in a power door control device 10 for a vehicle. The power door control device 10 automatically opens or closes a sliding door D as an opening and closing member for opening and closing an opening E provided on a side face of a structure (vehicle) V. The power door control device 10 includes a drive unit 11, an electronic control unit (hereinafter called "ECU") 12, an opening and closing switch 13, a courtesy switch 14, and the like.

The sliding door D is supported to a side face of a body V0 by means of a center guide rail V1 provided on a rear side face of the body V0, an upper guide rail V2 provided on an upper side of the opening E, and a lower guide rail V3 provided on a lower side of the opening E. The sliding door D moves in a vehicle longitudinal direction for opening and closing the opening E. The sliding door D moves between a fully closed position in which the opening E is completely' closed, and a fully open position in which the opening E is fully open (i.e. opening and closing area). When the sliding door D moves to open from the fully closed position, the sliding door D initially moves in a vehicle width direction and then linearly moves rearward, along three guide rails V1, V2, and V3, to the fully open position.

The drive unit 11, and the ECU 12 for controlling the sliding door D are both accommodated within the sliding door D, i.e., precisely between an inner panel of an interior side and an outer panel of an exterior side. The opening and closing switch 13 for inshucting to open or close the sliding door D is provided in the vicinity of a driving seat so as to be operated by a driver. The courtesy switch 14 is provided on a front side of the sliding door D in the vehicle longitudinal direction thereof for detecting that the sliding door D is in a fully closed state.

The drive unit 11 having a known structure is schematically shown in Fig. 2. The drive unit 11 includes a motor 15, a rotational position detecting mechanism 16, a wire drum 17, a first wire 18, a second wire 19, a deceleration mechanism (not shown), and the like. The motor 15 is powered by a battery installed in a vehicle, and, in that case, rotates in a positive or negative direction so as to move the sliding door D in the longitudinal direction of the vehicle V. The wire drum 17 rotates in a positive or negative direction via the deceleration mechanism by means of a driving force of the motor 15. A base portion of the first wire 18 whose end portion is fixed to a rear end (i.e. right side in Fig. 2) of the center guide rail V1, and a base portion of the second wire 19 whose end portion is fixed to a front end (i.e. left side in Fig. 2) of the center guide rail V1 are wound on the wire drum 17. In cases where the wire drum 17 rotates in a positive direction (i.e. in a direction of an arrow indicated with a chain double-dashed line in Fig. 2), the first wire 18 is reeled in while the second wire 19 is reeled out. The drive unit 11 drives the sliding door D to move in an opening direction from a closed state when the motor 15 rotates in the positive direction, and when the motor 15 rotates in the negative direction drives the sliding door D to move in a closing direction from an open state.

The rotational position detecting mechanism 16, which has a known structure and thus its detailed explanation is omitted, includes an annular magnetic 20 to be driven to rotate by the motor 15, and a pair of Hall elements, such as Hall ICs, 21 and 22 fixed on a housing of the rotational position detecting mechanism 16 and facing an outer periphery of the magnetic 20. A magnetization area in which north (N) poles and south (S) poles are alternately arranged at even intervals in a peripheral direction is formed on the outer periphery of the magnetic 20. The Hall ICs 21 and 22 each detect the magnetization area as the magnetic 20 rotates, and output periodic pulse signals P1 and P2 in synchronization with and in proportion to a rotational speed of the magnetic 20, precisely, the motor 15.

An electrical structure of the power door control device 10 is explained below.

The pulse signals P1 and P2 are output from the Hall elements 21 and 22 respectively such that the pulse signal P1 is out of phase with the pulse signal P2 by a half of pulse width for the purposes of phase detection. Both pulse signals P1 and P2 are input to the ECU 12. The ECU 12 compares the pulse signals P1 and P2, and based thereon determines a rotational direction of the motor 15, i.e. whether the sliding door D moves in an opening direction or a closing direction. Then, the ECU 12 calculates a speed of the sliding door D (i.e. a door speed) based on a period between rising edges or falling edges of the pulse signal P 1 or the pulse signal P2 input to the ECU 12. That is, while the sliding door D moves by a predetermined distance, a time interval between pulses of the pulse signal P1 or P2 input to the ECU 12 is counted by an internal counter of the micro 24 for the purposes of calculating a door speed based on the counted time interval by the counter.

The opening and closing switch 13 is of a three-position switch, which includes OFF position, and OPEN position and CLOSE position that are arranged on both sides of the OFF position. The OPEN position and CLOSE position are switched from the OFF position. When the opening and closing switch 13 is switched from the OFF position to the OPEN position, a switch input (i.e. opening instruction) is provided to the ECU 12 for moving the sliding door D to open from the fully closed position to the fully open position. When the opening and closing switch 13 is switched from the OFF position to the CLOSE position, a switch input (i.e. closing instruction) is provided to the ECU 12 for moving the sliding door D to close from the fully open position to the fully closed position.

The courtesy switch 14 is turned off when the sliding door D is positioned in the fully closed position. When the sliding door D is not in the fully closed position, the courtesy switch 14 is turned on and a switch status thereof is provided to the ECU 12. A battery voltage detecting sensor 23 detects a battery voltage and send it to the ECU 12.

In cases where the opening and closing switch 13 is turned from the OFF position to the CLOSE position, the ECU 12 controls the drive unit 11 to drive the sliding door D to automatically open from the fully closed position to the fully open position. In addition, in cases where the opening and closing switch 13 is turned from the OFF position to the OPEN position, the ECU 12 controls the drive unit 11 to drive the sliding door D to automatically close from the fully open position to the fully closed position.

The ECU 12 therein accommodates a microcomputer (hereinafter called "micro") 24, a PWM drive circuit 25 for driving the motor 15 by changing a width of duty ratio of on/off, and the like. According to the present embodiment, the micro 24 performs a position detection of the sliding door D based on pulse signals from the Hall elements 21 and 22 in addition to detections of operational speed and direction of the sliding door D. The micro 24 executes a program that is stored beforehand, and controls the motor 15 based on each output from the opening and closing switch 13, the courtesy switch 14, the Hall elements 21 and 22, and the battery voltage detecting sensor 23 so as to automatically move the sliding door D to open or close.

The micro 24 determines a PWM duty command signal SC by also considering a battery voltage detected by the battery voltage detecting sensor 23. The micro 24 then outputs a PWM duty command signal SC to the PWM drive circuit 25.

The PWM drive circuit 25 outputs, to the motor 15, a PWM drive signal SD representing a rotational direction and a duty ratio instructed by a PWM duty command signal SC so as to drive the motor 15 to rotate in the positive or negative direction.

Next, a target speed UM of the sliding door D is explained below. The target speed UM of the sliding door D is defined to be fast in cases where the sliding door D is positioned in the vicinity of a center of the opening and closing area of the sliding door D. In cases where the sliding door D is positioned in the vicinity of the fully closed position or the fully open position of the opening and closing area of the sliding door D, the target speed UM is defined to be slow. The target speed UM is defined to be relatively slow in the vicinity of the fully open position and the fully closed position, thereby reducing, from safety aspect, a pinch force caused by the opening or closing operation of the sliding door D.

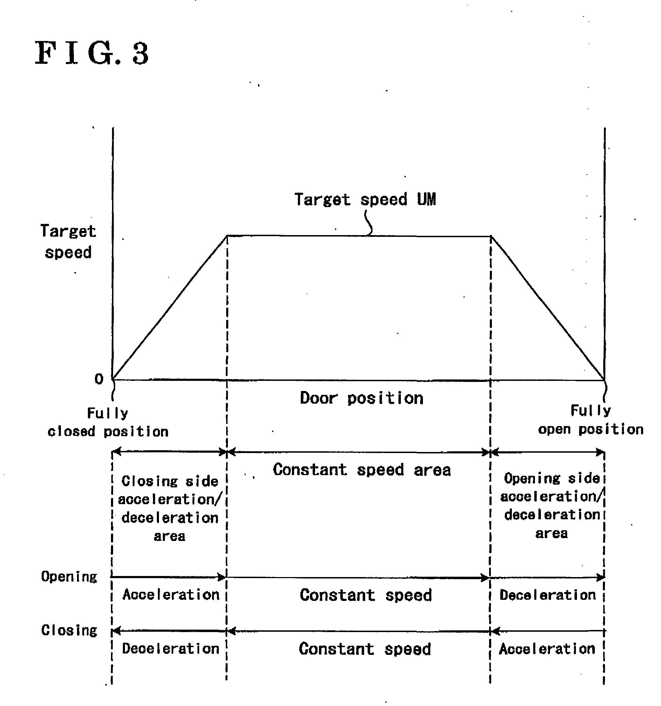

The target speed UM in the opening and closing area of the sliding door D is further explained with reference to Fig. 3. The opening and closing area of the sliding door D mainly includes three areas, i.e., precisely, a closing side acceleration/deceleration area (i.e. an acceleration area for an opening operation, and a deceleration area for a closing operation) including the fully closed position, an opening side acceleration/deceleration area (i.e. a deceleration area for an opening operation, and an acceleration area for a closing operation) including the fully open position, and a constant speed area disposed between the closing side acceleration/deceleration area and the opening side acceleration/deceleration area.

The closing side acceleration/deceleration area is an operation area in which the sliding door D moves initially in a vehicle width direction from the fully closed position and then moves in a rearward direction of the vehicle by a predetermined distance. The opening side acceleration/deceleration area is an operation area in which the sliding door D moves in a forward direction of the vehicle by a predetermined distance from the fully open position. The constant speed area is an operation area disposed between the closing side acceleration/deceleration area and the opening side acceleration/deceleration area.

In the aforementioned three areas, the target speed UM for moving the sliding door D is determined depending on a position of the sliding door D as explained below. The target speed UM is specified to be nearly zero in the fully closed position for the closing side deceleration/deceleration area, and specified to increase proportionally, i.e. linearly, for example, from the fully closed position to a boundary with the constant speed area. In addition, the target speed UM in the constant speed area is specified to be a constant value, which is a maximum door speed. Further, the target speed UM in the opening side deceleration/deceleration area is specified to decrease proportionally, i.e. linearly, for example, from a boundary with the constant speed area to the fully open position, and specified to be nearly zero in the fully open position.

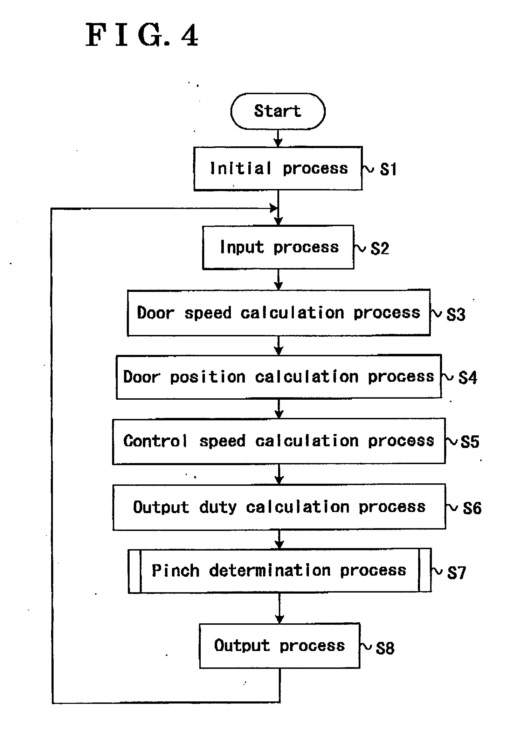

A process of program performed by the micro 24 for moving the sliding door D is explained below with reference to a flowchart in Fig. 4.

A control of the sliding door D in deceleration during a closing operation is explained since a pinch of an object may highly occur when a speed of the sliding door D is decreased in the closing side acceleration/deceleration area during the closing operation.

When the ECU 12 is powered (with 12V, for example) by a battery (not shown), the micro 24 starts operating and implements a process of the flowchart in Fig. 4 at predetermined control period intervals (a few ms, for example). In the explanation of the flowchart below, each step of the program is simply shown by "S" for easy explanation.

In S1, first, an initial process is performed. In the initial process, memory of a ROM for storing a program in the micro 24, a RAM for temporarily storing information necessary for controlling the sliding door D, and the like, and an internal timer are checked. In addition, it is checked whether a system driving for operating the sliding door D is properly operated. Then, in S2, an input process is performed. In the input process, an input status of the sensor 23, and the switches 13 and 14 to the micro 24 is input. Precisely, a switch status and a sensor signal are stored in a predetermined memory area in the RAM. In this case, two pulse signals sent from the Hall elements 21 and 22 are input on the basis of binary and stored in the predetermined memory area in the RAM in the micro 24. Next, in S3, a door speed calculation process is performed. In the door speed calculation process, a time period between pulses of the pulse signal P1 or P2 (for example, between rising edges, between falling edges, or between a rising edge and a falling edge) is counted in the internal counter so as to calculate a door speed based on the counted time period by the counter. Next, in S4, a door position calculation process is performed. In the door position calculation process, a value of a door position counter is incremented in cases where the sliding door D moves in the opening direction, or decremented in cases where the sliding door D moves in the closing direction, on the basis of the fully closed position of the sliding door D to be regarded as zero point. As an alternative method, a present position of the sliding door D can be calculated by multiplying a moving time and a speed of the sliding door D. Then, the micro 24 proceeds to S5 in which a control speed calculation process is performed.

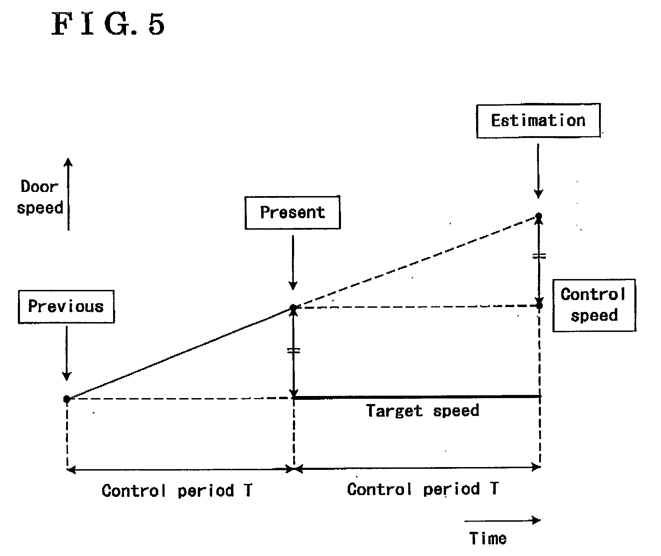

The control speed calculation process is explained with reference to Fig. 5. The micro 24 obtains a door speed per control period (a few ms) by the aforementioned method. In this case, a door speed obtained in a present control period is regarded as a present door speed. In addition, a door speed obtained in 1 control period before (a few ms before) is regarded as a previous door speed. Then, as shown in Fig. 5, an estimation door speed in a next control period is evaluated by adding a value obtained by subtracting the previous door speed from the present door speed to the present door speed.

Then, an intermediate speed between the estimation speed and a target speed for the present door position is obtained as a control speed.

That is, the control speed is evaluated by dividing a value of a sum of the estimation door speed and the target speed in the present position by two. Further, a speed correction amount is obtained from an estimation door speed and a control speed in the next control period and applied to the control speed in the present control period. That is, the speed correction amount is calculated by subtracting the estimation door speed from the control speed in the next control period. In cases where the speed correction amount is regarded as zero or more, and an absolute value of speed correction amount exceeds a predetermined acceleration limit value (acceleration limit value>0), the speed correction amount is restricted to a acceleration limit value (α). Meanwhile, in cases where the speed correction amount is smaller than zero, and an absolute value of speed correction amount exceeds a predetermined deceleration limit value, the speed correction amount is restricted to a deceleration limit value (β). These restrictions are put on a speed correction amount for the purposes of avoiding an effect by hunting when a disturbance affects.

In S6, an output duty calculation process for generating a PWM duty command signal to drive the motor 15 is performed. The PWM duty command signal is generated on the basis of a present duty ratio so that the calculated control speed in S5 is obtained. The PWM duty command signal is obtained by converting a voltage applied to the motor 15. For example, assuming that a voltage correction amount is obtained by dividing a speed correction amount by a speed equivalent value evaluated from a voltage applied to the motor 15, a duty ratio is determined based on a voltage correction amount, a previous voltage level, and a power supply voltage level (i.e. average voltage level of 5 control periods, for example). In this case, a speed equivalent value evaluated from a voltage applied to the motor 15 is different in case of an opening operation and a closing operation of the sliding door D.

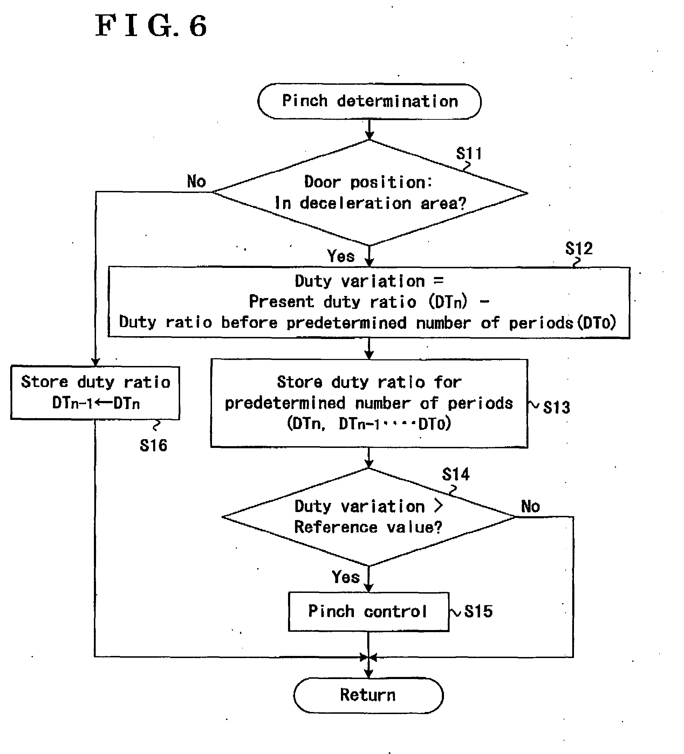

Next, in S7, a pinch determination process is performed as shown in Fig. 6. That is, first in S 11, it is determined whether the sliding door D is positioned in a deceleration area but not in the fully closed position (which is described as the closing side acceleration/deceleration area in Fig. 3), while moving to close from an opening direction to a closing direction. When it is determined that the sliding door D is not positioned in the deceleration area, a present duty DTn is stored in a memory in S16 so as to update a duty ratio (i.e. present duty ratio is stored as a previous duty ratio). Then, the pinch determination process is finished.

On the other hand, when it is determined that the sliding door D is positioned in the deceleration area and does not reach the fully closed position, a duty variation calculating process is performed in S 12. A duty variation is obtained by subtracting a previous duty DTO obtained before the predetermined number of control periods (for example, two or three periods before a present control period) from a present duty DTn. Next, in S 13, duty ratios obtained between the predetermined number of control periods before the present control period and the present control period are stored in the memory in time series manner. That is, the RAM in the micro 24 has buffers for storing duty ratios for the predetermine number of control periods. A new duty ratio is sequentially stored in contiguous buffer in time series manner. Then, an old duty ratio stored in a buffer before the predetermined number of periods is sequentially abandoned. In S4, a duty variation is compared with a predetermined reference value. When it is determined that the duty variation does not exceed the reference value, the pinch determination process is finished. On the other hand, when it is determined that the duty variation exceeds the reference value a pinch control is performed in S15. In this pinch control, the micro 24 determines that a pinch has occurred between the sliding door D and the body V0 when the sliding door D is moving, and immediately stops the operation of the sliding door D. Alternatively, the micro 24 brings the sliding door D to move in an opposite direction to a present operation direction so as to prevent a pinch force to be increased at a time of pinch detection.

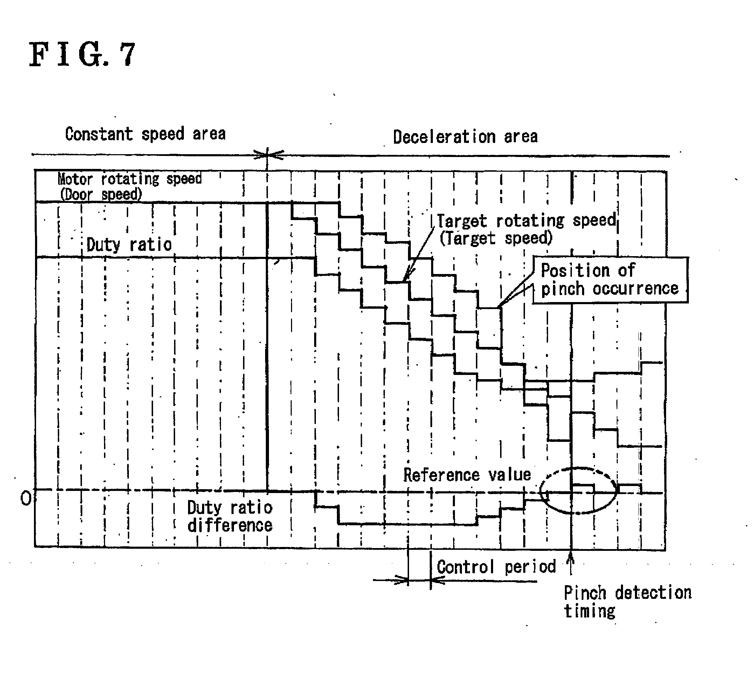

Next, the pinch control is explained with reference to Fig. 7.

The motor 15 for driving the sliding door D is controlled by changing a duty ratio as mentioned above. In cases where the sliding door D is controlled to move in the closing direction, a duty ratio is decreased so that a motor rotating speed (which corresponds to a door speed) in the deceleration area in Fig. 7 becomes close to a target rotating speed (which corresponds to a target speed), which is a deceleration control. According to the present embodiment, an estimation door speed in a next control period is estimated based on a present door speed. Then, a control speed is evaluated based on that estimation door speed and a target speed for the present door speed as mentioned above. The micro 24 determines a duty ratio such that the evaluated control speed is acquired for controlling the sliding door D.

At this time, in cases where a pinch occurs in the opening E between the sliding door D and the body V0 while the sliding door D moves in the closing direction, the closing movement of the sliding door D is inhibited. Then, a rotating speed of the motor 15 is decreased. In this case, if a rotating speed of the motor 15 becomes below a target speed UM, which is determined based on a door position, in the deceleration area, the micro 24 outputs a PWM duty command signal to the PWM drive circuit 25 so as to increase a duty ratio. At this time, if the micro 24 outputs, to the motor 15, the signal for increasing a duty ratio, a driving force of the motor 15 is increased, which may increase a force for moving the sliding door D. As a result, a pinch force at a time of pinch occurrence may be increased. Therefore, in order to avoid such circumstances, the micro 24 monitors a difference between a present duty ratio and a duty ratio before the predetermined number of control periods (2 or 3 periods before, for example). When a duty ratio difference exceeds a reference value, the pinch determination process is performed at a time of pinch detection.

Precisely, according to the present embodiment, in cases where a door speed becomes below a target speed, a pinch force is prevented from being increased at a time of pinch detection by providing a reference value for the pinch determination so as to monitor a duty ratio difference. According to a conventional technique, when the deceleration control of the sliding door D is performed on a portion before the fully closed position, a speed of the sliding door D is not constant and also a speed variation is caused depending on a door position due to a mechanical factor, even by avoiding a wrong pinch determination due to disturbance, or specifying a target speed depending on a door position. Therefore, a reference value for implementing the pinch determination is specified high relative to a speed decrease amount or a target speed. However, according to the present embodiment, a target speed is specified depending on a door position, and then a control speed is calculated each time, by considering a mechanical factor, based on the target speed per predetermined control period. Then, a duty ratio control is performed on the sliding door D so that the control speed can be acquired.

While the sliding door D is controlled to be decelerated, a duty ratio is decreased so that a door speed can reach a target speed. When the door speed becomes below the garget speed, the micro 24 increases a duty ratio. At this time, according to the present embodiment, the micro 24 monitors a duty ratio difference by providing a reference value. Then, if a duty ratio difference exceeds the reference value, the micro 24 can detect a pinch. The reference value is specified without considering a mechanical factor accordingly. That is, the reference value for the pinch determination may be specified to a smaller level than that of the conventional technique even during the deceleration control of the sliding door D. The accurate pinch determination may be achieved against disturbance.

According to the present embodiment, the opening/closing member is explained as the sliding door D. However, in a vehicle, a member that relatively moves to a structure is acceptable, such as a window glass, and a sunroof.

In addition, according to the present embodiment, the duty ratio difference is obtained before the predetermined number of control periods, i.e. before 2 or 3 control periods. However, the duty ratio difference may be obtained before 4 or greater number of periods.

Further, the pinch detection may be performed by evaluating a difference between a present duty ratio and a duty ratio before the predetermined number of control periods, by integrating the evaluated duty ratio difference for a predetermined control period, and by comparing that integration value with a reference value for the pinch detection.

Furthermore, according to the present embodiment, a pinch between the structure and the opening/closing member is explained. However, a pinch may be detected in cases where a movement of the opening/closing member is inhibited because of a human factor such as a hand and a foot of human.

Furthermore, according to the present embodiment, the control speed is specified so as to be equal to or greater than the target speed. Therefore, in the deceleration control of the sliding door D, a duty ratio may be reduced in a state in which the sliding door D is controlled to be equal to or higher than the target speed.

Furthermore, according to the present embodiment, a present duty ratio is compared with a duty ratio before the predetermined number of control periods, thereby achieving a sensitive detection ability of pinching.

Furthermore, according to the present embodiment, the ECU 12 obtains a speed correction amount from an estimation speed and a control speed, and then puts a restriction on the speed correction amount for determining a duty ratio. Even if a door speed is affected by disturbance, a duty ratio is determined with restriction and thus the pinch determination may be prevented from receiving the effect caused by disturbance. Reliability of a control device of opening and closing member may be improved.
A control device of opening and closing member (10) includes a driving means (15) for driving, by means of a duty ratio control, an opening and closing member (D), a speed detecting means, and a controlling means (12) for driving the opening and closing member, and stopping or reversing a movement of the opening and closing member characterized in that the controlling means includes a duty ratio determining means (24) for providing a duty ratio to the driving means every predetermined number of periods so that a speed of the opening and closing member reaches the control speed, and increasing a duty ratio when a speed of the opening and closing member becomes below the target speed, and a duty ratio difference calculating means for calculating a difference between a present duty ratio (DTn) and a duty ratio before a predetermined number of periods (DTO).

## Claims

1. A control device of opening and closing member (10) includes a driving means (15) for driving, by means of a duty ratio control, an opening and closing member (D) to be opened or closed relative to an opening portion (E) provided on a structure (V), a speed detecting means (21, 22) for detecting a moving speed of the opening and closing member, and a controlling means (12) for driving the opening and closing member based on a position of the opening and closing member, and stopping or reversing a movement of the opening and closing member when a movement of the opening and closing member is inhibited between the opening and closing member and the structure **characterized in that** the controlling means includes a target speed determining means (24) for determining a target speed of the opening and closing member, a speed estimating means (24) for estimating a moving speed of the opening and closing member, a control speed determining means (24) for determining a control speed of the opening and closing member based on an estimated speed estimated by the speed estimating means and the target speed, a duty ratio determining means (24) for providing a duty ratio to the driving means every predetermined number of periods so that a speed of the opening and closing member reaches the control speed, and increasing a duty ratio when a speed of the opening and closing member becomes below the target speed, a duty ratio difference calculating means for calculating a difference between a present duty ratio (DTn) and a duty ratio before a predetermined number of periods (DT0), and a movement inhibition detecting means for detecting that a movement of the opening and closing member is inhibited when the duty ratio difference exceeds a reference value.

2. A control device of opening and closing member (10) according to claim 1, wherein the control speed is defined to be equal to or greater than the target speed.

3. A control device of opening and closing member (10) according to claim 2, wherein the predetermined number of periods is a few periods.

4. A control device of opening and closing member (10) according to claim 1, wherein the controlling means (12) evaluates a speed correction amount based on the estimated speed and the control speed, restricts the speed correction amount, and determines a duty ratio.

5. A control device of opening and closing member (10) according to claim 1, wherein the opening and closing member (D) includes a vehicle door (D) for which the target speed is defined on the basis of a door position.

6. A control device of opening and closing member (10) according to claim 5, wherein the control speed determining means (24) specifies an intermediate speed between the estimated speed estimated by the speed estimating means and the target speed for a present door position as the control speed.

7. A control device of opening and closing member (10) according to claim 5, wherein the controlling means (12) evaluates a speed correction amount based on the estimated speed and the control speed, and restricts the speed correction amount to either an acceleration limit value (α) or a deceleration limit value (β).

8. A control device of opening and closing member (10) according to claim 5, wherein the controlling means (12) evaluates the difference between the present duty ratio and the duty ratio before the predetermined number of periods, and compares an integration value that is obtained by integrating the evaluated duty ratio difference for a predetermined period with the reference value for detecting whether a pinch occurs in the vehicle door.
